# FASCICULE DE BREVET EUROPEEN

(11) **EP 2 757 349 B1**
(45) Date de publication et mention de la délivrance du brevet: **20.02.2019**
(21) Numéro de dépôt: 14150243.5
(22) Date de dépôt: 06.01.2014
(51) Int. Cl.: G01C 21/00, G08G 5/00, G05D 1/02, G05D 1/10, G05D 1/00

(54) **Procédé de définition d'une route de repli pour un engin mobile, procédé associé de repli sur une telle route pour un engin mobile, module et programme d'ordinateur associés**
Verfahren zur Bestimmung einer Rückzugsroute für eine mobile Maschine, entsprechendes Verfahren zur Umleitung nach diese Route für eine bewegliche Maschine, entsprechende Modul und Computerprogramm
Method for defining a fallback route for a mobile machine, associated fallback method to join such a route for a mobile machine, associated module and computer program.

(30) Priorité: 18.01.2013 FR 1300111
(43) Date de publication de la demande: 23.07.2014
(73) Titulaire: Dassault Aviation, 75008 Paris (FR)
(72) Inventeur: Pflimlin, Jean-Michel, 78510 Triel Sur Seine (FR); Dauphin, Gildas, 78160 Marly-Le-Roi (FR)
(74) Mandataire: Lavoix

(56) Documents cités:
- EP-A1- 1 612 632
- EP-A1- 1 857 904
- EP-A2- 1 462 898
- US-A- 4 862 373
- RONG ZHU ET AL: "Collision-free Path Planning and Trajectory Generation for MAVs Flying in Urban Terrain", INTELLIGENT ROBOTS AND SYSTEMS, 2006 IEEE/RSJ INTERNATIONAL CONFERENCE ON, IEEE, PI, 1 octobre 2006 (2006-10-01), pages 2888-2893, XP031006542, ISBN: 978-1-4244-0258-8

## Description

La présente invention concerne un procédé de définition d'une route de repli comprenant des points de passage, pour un engin mobile, dans une zone de déplacement 3D comportant des zones convexes telles que sur une plage considérée d'un axe Z, lesdites zones décrivent chacune un polygone dans tout plan perpendiculaire à un axe Z.

Par exemple, lorsque l'engin mobile est un engin aérien, en conditions nominales de vol, un opérateur surveille que le plan de vol suivi par l'engin aérien habité ou inhabité, s'inscrit bien dans la zone de déplacement qui lui a été attribuée. Cependant, en cas d'aléas (avarie technique, perte de communication, ou commande opérateur), l'engin aérien peut avoir à quitter son plan de vol courant pour rejoindre une route de repli prédéterminée, dite route d'urgence, définie par une succession de points de passage, censée le ramener à la base ou en tout autre lieu sûr (hippodrome d'attente par exemple). Rejoindre cette route d'urgence ne doit surtout pas conduire l'engin aérien à sortir de la zone de déplacement qui lui a été attribuée.

En effet, l'événement de « sortie de zone » est considéré comme potentiellement catastrophique. Dans certains cas, la gravité de cet évènement peut être même supérieure à la perte de l'engin aérien.

La zone de déplacement, généralement connexe et non convexe, est subdivisée en un ensemble de zones convexes définies chacune sur une tranche d'altitude donnée.

Une telle zone convexe est généralement constituée d'un parallélépipède tel que sa projection sur un plan horizontal quelconque de la tranche d'altitude donnée, donne un même polygone convexe dans le plan horizontal.

L'assemblage de ces zones convexes peut conduire à une géométrie de zone de déplacement très complexe.

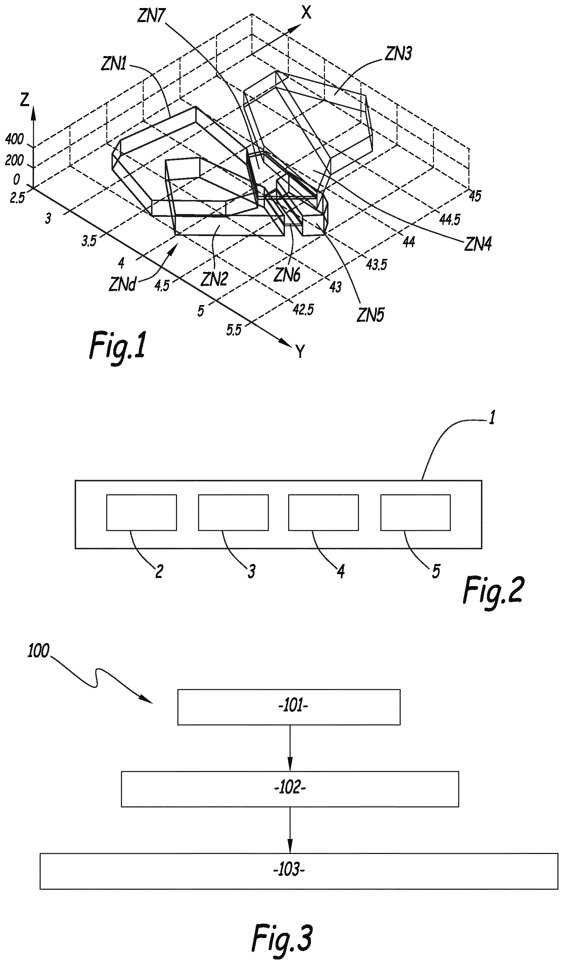

Par exemple, la figure 1 représente une zone de déplacement ZNd comprenant sept zones convexes ZN1, ZN2, ZN3, ZN4, ZN5, ZN6 et ZN7. La zone ZNd est non convexe. Mais elle est connexe en ce qu'il existe au moins un chemin qui permet de joindre deux points quelconques de la zone ZNd en restant dans la zone ZNd.

Pour un engin non holonome, on sait calculer des itinéraires qui restent contenus dans une même zone convexe, pour peu que les points de départ et d'arrivée, ainsi que les cercles de virage autour de ces deux points soient dans la même zone convexe (en utilisant des courbes de Dubin par exemple).

Le problème à résoudre, lors d'un événement de rejointe d'une route d'urgence, est donc de déterminer, parmi tous les points de passage de la route d'urgence, quels sont ceux qui sont dans la même zone convexe que l'engin mobile au moment d'initier le repli, de manière à rejoindre la route d'urgence en atteignant d'abord un de ces points de passage de la zone d'urgence, puis en suivant la route d'urgence, et ainsi ne pas sortir de la zone de déplacement attribuée.

Étant considéré un point de l'espace représentant la position de l'engin mobile et un ensemble de zones convexes, les solutions existantes proposent de tester, pour chaque zone convexe, l'appartenance du point considéré à cette zone.

L'engin mobile stockant l'ensemble des sommets de chaque zone convexe de manière ordonnée (par exemple dans le sens de parcours horaire), des critères simples permettent de vérifier l'appartenance du point à cette zone convexe, en vérifiant par exemple que la somme des angles reliant le point à chacun des sommets de la zone convexe, en prenant l'axe entre le point et un premier sommet de la zone convexe comme référence, est égale à 360°.

Le problème des solutions existantes est qu'elles obligent à stocker l'ensemble des coordonnées des sommets de toutes les zones convexes et à réaliser des calculs vis-à-vis de tous les points stockés, ce qui nécessite un grand volume de stockage de données de manière permanente, et qui occasionne, lors des événements de repli sur une route d'urgence, une grande complexité et un grand volume de calculs nécessitant l'embarquement de machines de calcul puissantes.

Le document EP 1 612 632 A1 divulgue un procédé de définition d'une route de repli comprenant des points de passage, pour un engin mobile, dans une zone de déplacement 3D comportant des zones convexes telles que sur une plage considérée d'un axe Z, lesdites zones décrivent chacune un polygone dans tout plan perpendiculaire à un axe Z, ledit procédé étant mis en oeuvre par ordinateur et comprenant une étape de vérification et validation des points de passage de la route pour vérifier si ces points se trouvent bien dans la zone de déplacement.

EP 1 857 904 A1 décrit une méthode de définition d'une route d'urgence dans laquelle l'espace est divisé en cellules et chaque cellule est associée à des coordonnées géographiques et à un identifiant. Chaque cellule contient un identifiant de la cellule correspondant au prochain point de passage de la route d'urgence.

US 4 862 373 A décrit un procédé de calcul de route dans une zone de l'espace contenant des obstacles, dans lequel l'espace correspondant à des plages d'altitude données est partitionné à l'aide d'un diagramme de Voronoi, la route suivant les arêtes de ce diagramme afin d'éviter les obstacles.

La publication "RONG ZHU ET AL: "Collision-free Path Planning and Trajectory Génération for MAVs Flying in Urban Terrain", INTELLIGENT ROBOTS AND SYSTEMS, 2006 IEEE/RSJ INTERNATIONAL CONFERENCE ON, IEEE, PI, 1 octobre 2006 (2006-10-01)", décrit un procédé de planification de route pour un engin mobile, dans un espace contenant des obstacles, l'espace étant partitionné à l'aide d'une triangulation de Delaunay, les points médians des triangles correspondant aux zones sans obstacles étant choisis comme candidats pour les points de passage de la route.

Il est ainsi souhaitable de déterminer une solution limitant la complexité des algorithmes permettant de rejoindre une route d'urgence et/ou limitant le nombre de données à stocker.

A cet effet, suivant un premier aspect, l'invention propose un procédé de définition d'une route de repli selon la revendication 1.

Une telle définition de la route d'urgence permet à un engin mobile de s'affranchir de la connaissance de la forme de la zone de déplacement et de ne tenir compte que de la connaissance de la route d'urgence ainsi définie et embarquée, pour déterminer parmi les points de passage de la route d'urgence, quels sont ceux qui sont dans la même zone convexe que l'engin mobile au moment d'initier le repli sur la route d'urgence. Ainsi l'engin mobile n'aura nul besoin de stocker les coordonnées des zones convexes.

Par la seule connaissance de sa position au moment d'initier le repli sur la route d'urgence et des données de définition de la route d'urgence, l'engin mobile saura déterminer de façon autonome, parmi les points de passage de la route d'urgence, quels sont ceux qui sont dans la même zone convexe que l'engin mobile au moment de rejoindre la route d'urgence, sans connaissance a priori de la zone convexe dans laquelle il se trouve.

Dans des modes de réalisation, le procédé de définition d'une route de repli suivant l'invention comporte en outre une ou plusieurs des caractéristiques des revendications 2 à 4.

Suivant un deuxième aspect, la présente invention propose un module de définition d'une route de repli selon la revendication 5.

Suivant un troisième aspect, la présente invention propose un programme d'ordinateur de définition d'une route de repli selon la revendication 6.

Suivant un quatrième aspect, la présente invention propose un procédé de repli, par un engin mobile, sur une route de repli, selon la revendication 7.

Suivant un cinquième aspect, la présente invention propose un module selon la revendication 8.

Suivant un sixième aspect, la présente invention propose un programme d'ordinateur selon la revendication 9.

Ces caractéristiques et avantages de l'invention apparaîtront à la lecture de la description qui va suivre, donnée uniquement à titre d'exemple, et faite en référence aux dessins annexés, sur lesquels :
- la figure 1 représente en 3D une zone de déplacement d'un engin aérien comprenant des zones convexes ;
- la figure 2 représente un module de définition d'une route d'urgence dans un mode de réalisation de l'invention ;
- la figure 3 représente un organigramme des étapes d'un procédé de définition d'une route d'urgence dans un mode de mise en oeuvre de l'invention ;
- la figure 4 représente une vue dans le plan (X, Y) des zones convexes pour une plage d'altitude considérée ;
- la figure 5 représente en 3D une zone de déplacement d'un engin aérien comprenant des zones convexes et les points balises définis pour la route d'urgence ;
- la figure 6 représente un module de repli d'une route d'urgence dans un mode de réalisation de l'invention ;
- la figure 7 représente un organigramme des étapes d'un procédé de repli d'une route d'urgence dans un mode de mise en oeuvre de l'invention.

Quelques définitions et propriétés des diagrammes de Voronoï sont tout d'abord rappelées.

Si on considère un ensemble de points E = {x₁, x₂,..., xₙ} dans un plan, alors pour chaque point xᵢ, dans E, il existe une cellule Pxᵢ, telle que pour tout x de Pxᵢ, la distance d(x,xᵢ) < d(x,xⱼ), quel que soit xⱼ appartenant à E (j différent de i). L'ensemble des cellules Pxᵢ définit alors le diagramme de Voronoi associé à E. Une cellule est définie comme un polygone qui peut être ouvert (certaines arêtes du polygone sont alors des droites ou des demi-droites) ou fermé (toutes les arêtes sont des segments).

Le principe sous-tendant l'invention est de définir dans chaque polygone décrit par une zone convexe dans un plan, des points balises associés à la route d'urgence tels que les cellules du diagramme de Voronoï, qui sont associées à ces points balises du polygone, séparent ce polygone des autres polygones décrits dans le même plan.

Ainsi, des points qui appartiennent à des zones convexes différentes ne peuvent appartenir à la même cellule du diagramme de Voronoi.

Dans un mode de réalisation, un module de définition 1 d'une route d'urgence selon l'invention destinée à un engin aérien comporte une mémoire de travail 2, une base de données 3 destinée à mémoriser des données de définition de la route d'urgence, un microprocesseur 4 et une interface homme-machine 5 comportant par exemple un écran, un clavier et une souris d'ordinateur. Ce module 1 est par exemple localisé dans un local d'une base des engins aériens.

On considère par exemple la zone de déplacement ZNd représentée en figure 1, comportant les zones convexes ZN1 à ZN7.

Dans un mode de réalisation d'un procédé 100 de définition d'une route d'urgence selon l'invention, en référence à la figure 2, les étapes 101-103 indiquées ci-dessous sont mises en oeuvre.

Dans un mode de réalisation, ces étapes, ou au moins certaines d'entre elles, sont réalisées suite à l'exécution d'instructions logicielles d'un programme d'ordinateur, par exemple, dans le cas considéré, stocké dans la mémoire 2 du module de définition 1.

Dans le cas considéré, une suite ordonnée de points de passages Pi, i = 1 à m, a été prédéterminée pour la route d'urgence. Le point Pm correspond par exemple à la base à laquelle il convient de ramener un engin aérien en cas d'urgence.

Un engin aérien rejoignant un point de passage Pi quelconque devra ensuite rejoindre, à partir du point Pi, le point de passage Pi+1, et ainsi de suite, de proche en proche, jusqu'au point Pm.

Dans la mémoire 2, les coordonnées dans un repère 3D de chaque point de passage sont mémorisées. Ce repère 3D, nommé R, est par exemple défini par une origine O et par 3 axes orthogonaux X, Y, Z où Z correspond à l'altitude. On associe en outre, dans la mémoire 2, à chaque point de passage, un identifiant de la zone convexe à laquelle il appartient, ce qui est aisément déterminable en fonction des coordonnées du point de passage et des données de définition des zones convexes. On associe en outre à chaque point de passage un attribut indiquant qu'il est un point de passage de la route d'urgence.

La mémoire 2 du module de définition 1 comprend les données de définition des zones convexes : elle contient notamment, pour chaque zone ZNi, i = 1 à 7, l'altitude plancher Zli et l'altitude plafond Zhi de la zone ZNi, et la définition des côtés du polygone décrit par la zone ZNi dans tout plan parallèle au plan (X, Y) située à une altitude comprise entre les altitudes Zli et Zhi.

Dans une étape 101, on découpe l'axe Z, à partir de l'altitude correspondant au plancher minimum parmi les altitudes planchers, et jusqu'à l'altitude plafond maximum parmi les altitudes plafonds, en plages d'altitude telles qu'au sein d'une même plage d'altitude, les polygones décrits par les zones convexes dans cette plage, soient décrits sur toute la plage. Dit autrement, on ordonne par ordre croissant les altitudes de l'ensemble des altitudes constitué des altitudes planchers et plafonds des sept zones ZN1 à ZN7. Et chaque plage d'altitude correspond à un segment entre deux altitudes de cette suite ordonnée.

Dans le cas considéré, on obtient ainsi 6 plages d'altitude H1, H2, H3, H4, H5, H6, avec :
H1 = [Zl2=Zl5 ; Zl6] ;
H2 = [[Zl6 ; Zh6] ;
H3 = [Zh6 ; Zh2=Zh5=Zl4=Zl3=Zl1] ;
H4 = [Zh2=Zh5=Zl4=Zl3=Zl1 ; Zl7] ;
H5 = [Zl7 ; Zh7] ;
H6 = [Zh7 ; Zh4=Zh3=Zh1].

Dans une étape 102, pour chaque plage d'altitude considérée successivement, en commençant par la plage H1, un processus est mis en oeuvre pour construire des points, dits points balises, associés à la route d'urgence.

Ainsi l'étape 102 comprend les étapes successives 102(1), ..., 102(6) mises en oeuvre pour les plages d'altitude respectives Hi, avec i= 1 à 6.

On considère un plan P1 quelconque parallèle au plan (X, Y) à une altitude quelconque dans la plage H1 : il comporte deux polygones disjoints décrits par les zones convexes ZN2 et ZN5.

L'étape 102(1) pour la première plage d'altitudes considérée H1 a pour but de construire un ensemble de points balises dans le plan P1 tels que les arêtes du diagramme de Voronoï dans le plan P1 associés à cet ensemble soient les côtés des polygones décrits dans ce plan ou séparent entre eux les polygones lorsqu'ils n'ont pas de côtés communs.

Dans cette étape 102(1), dans une première itération de la sous-étape 102(1)1, on insère un point balise PB1 dans la zone ZN2 et un point balise PB3 dans la zone ZN5 (ces points sont choisis dans le cas présent en tant que symétriques d'un point PB2, situé dans l'espace entre les polygones décrits par ZN2, ZN5, par rapport au côté le plus proche de PB2 de chacun de ces polygones).

Cette insertion est par exemple définie par l'opérateur du dispositif de définition 1 via l'interface homme-machine 5, par exemple en pointant un curseur à un endroit choisi à l'aide d'une souris sur une représentation du plan P1 affichée à l'écran et en cliquant sur un bouton de la souris pour indiquer que le point balise est à insérer à l'endroit pointé.

Puis des points balises supplémentaires symétriques à chacun de ces points balises insérés dans un polygone par rapport à chacun des côtés du polygone sont insérés, si toutefois ces points balises symétriques sont dans la zone de déplacement ZNd, ce qui n'est pas le cas pour H1.

Les coordonnées (X, Y) dans le repère R de chacun de ces points balises insérés sont mémorisées dans la mémoire de travail 2, en association avec un identifiant de la zone convexe d'appartenance (ainsi PB1 avec l'identifiant de la zone ZN2 et PB3 celui de la zone ZN5), et en association avec une altitude plancher égale à la borne basse d'altitude de la plage H1 (i.e. ZI2=ZI5).

Ensuite, le diagramme de Voronoï correspondant à l'ensemble des points balises considérés est déterminé. Différents types d'algorithmes connus peuvent être utilisés à cette fin, par exemple l'algorithme « Quickhull » ou l'algorithme de triangulation de Delaunay. Les arêtes du diagramme obtenues sont comparées avec les polygones décrits par les zones convexes dans le plan P1.

Les arêtes du diagramme de Voronoï séparant entre eux les deux polygones, alors l'étape 102(1) est terminée. Et on passe à l'étape 102(2).

Si pour les points balises choisis, les arêtes du diagramme de Voronoï n'avaient pas séparé entre eux les polygones ZN2, ZN5, alors dans une sous-étape 102(1)2, on aurait inséré alors un ou plusieurs nouveaux points balises dans un ou plusieurs polygones décrits par les zones convexes dans P1.

Pour chaque nouveau point balise ainsi inséré dans un polygone, on aurait inséré en outre des points balises supplémentaires symétriques à ce point balise par rapport aux différents côtés de ce polygone dans le cas où ces points balises supplémentaires symétriques appartiendraient à la zone de déplacement ZNd.

Les coordonnées (X, Y) de chacun de ces points balises ainsi insérés auraient été mémorisées dans la mémoire de travail, en association avec un identifiant de la zone convexe d'appartenance, et en association avec une altitude plancher égale à la borne basse d'altitude de la plage H1.

Puis on aurait réitéré la sous-étape 102(1)1 et le cas échéant la sous-étape 102(1)2 jusqu'à ce que la condition d'arrêt de l'étape 102(1) soit satisfaite.

Considérons maintenant une plage d'altitude Hi, pour i quelconque entre 2 et 6.

Les étapes 102(1), ..., 102(i-1) ont été mises en oeuvre pour les plages d'altitude H1,..., Hi-1.

On considère un plan Pi quelconque parallèle au plan (X, Y) à une altitude quelconque dans la plage Hi : il comporte un ou des polygones, chacun de ces polygones est décrit par une zone convexe parmi les zones convexes ZN1 à ZN7.

L'étape 102(i) pour la plage d'altitudes considérée Hi a pour but de construire un ensemble de points balises dans le plan Pi tels que les arêtes du diagramme de Voronoï dans le plan Pi associé à cet ensemble séparent entre eux les polygones décrits dans ce plan, en se superposant aux côtés qui sont communs à plusieurs polygones décrits dans ce plan et s'intercalant entre deux côtés de deux polygones voisins mais non joints.

On considère l'ensemble des points balises utilisés dans la sous-étape 102(i-1) pour construire le diagramme de Voronoï correspondant aux polygones décrits pour la plage précédant la plage Hi.

On ne prend plus en compte dans les étapes relatives à Hi les points balises définis à l'étape précédente qui ne figurent plus dans la zone de déplacement ZNd pour la plage d'altitude courante. Pour ces points balises, on fixe dans la mémoire 2, leur altitude plafond à une valeur égale à la borne inférieure de la plage courante.

Dans une première itération de la sous-étape 102(i)1, le diagramme de Voronoï correspondant à l'ensemble des points balises considérés pour Hi-1 et situé dans la zone de déplacement ZNd pour la plage d'altitude courante, est déterminé. Les arêtes du diagramme obtenues sont comparées avec les polygones décrits par les zones convexes dans le plan Pi.

Si ces arêtes du polygone de Voronoï séparent entre eux les polygones, alors l'étape 102(i) est terminée. Et on passe à l'étape 102(i+1) si i < 6.

Sinon, alors dans une sous-étape 102(i)2, on insère un ou plusieurs nouveaux points balises dans un ou plusieurs polygones décrits par les zones convexes dans Pi (au total, il faut qu'il y ait au moins un point balise par polygone).

Comme indiqué pour H1, cette insertion est par exemple définie par l'opérateur du dispositif de définition 1 via l'interface homme-machine 5, par exemple en pointant un curseur à un endroit choisi à l'aide d'une souris sur une représentation du plan Pi affiché à l'écran et en cliquant sur un bouton de la souris pour indiquer que le point balise est à insérer à l'endroit pointé.

Pour chaque nouveau point balise ainsi inséré dans un polygone, on insère en outre des points balises supplémentaires symétriques à ce point balise par rapport aux différents côtés de ce polygone seulement s'ils sont dans la zone de déplacement ZNd pour la plage d'altitude courante.

Les coordonnées (X, Y) de chacun de ces points balises ainsi insérés sont mémorisées dans la mémoire de travail, en association avec un identifiant de la zone convexe d'appartenance, ou sans identifiant de zone s'ils se situent hors de la zone de déplacement ZNd et en association avec une altitude plancher égale à la borne basse d'altitude de la plage Hi.

Puis on réitère la sous-étape 102(i)1 et le cas échéant la sous-étape 102(i)2 jusqu'à ce que les arêtes du diagramme de Voronoï déterminé séparent les polygones.

Une fois que l'étape 102(6) est terminée, on associe aux points balises ayant été utilisés pour la construction du diagramme de Voronoï à la dernière itération de la sous-étape 102(6)1, l'altitude plafond égale à la borne supérieure de la plage H6 dans la mémoire provisoire 2.

Dans une étape 103, chaque point balise construit dans l'étape 102 est mémorisé dans la base de données 3 en association avec ses coordonnées (X, Y), son altitude plancher, son altitude plafond, l'identifiant de la zone convexe à laquelle il appartient tels que figurant dans la mémoire provisoire 2, et en association en outre avec un attribut indiquant qu'il est un point balise de la route d'urgence.

Et les coordonnées (X, Y, Z) de chaque point de passage mémorisées dans la mémoire 2, sont mémorisées dans la base de données 3, en association avec un identifiant de la zone convexe à laquelle il appartient et un attribut indiquant qu'il est un point de passage de la route d'urgence.

Les données de la route d'urgence construite selon l'invention, relatives à ses points de passage et à ses points balises, sont ainsi mémorisées dans la base de données 3.

Dans un mode de réalisation, dans une étape optionnelle, un ou des points balises peuvent être ajoutés en outre comme points de passage. Un attribut est alors ajouté dans la base 3 en association à un tel point de balise, indiquant qu'il est un point de passage de la route d'urgence. Un tel point balise peut être éventuellement ajouté à la place d'un point de passage prédéterminé, qui est alors supprimé de la base de données 3, sous réserve qu'ils fassent partie de la même zone convexe et par exemple seulement si la distance entre le point balise et le point de passage est inférieure à un seuil donné, ou encore seulement si l'opérateur du dispositif 1 les a désignés via le module d'interface homme-machine 5.

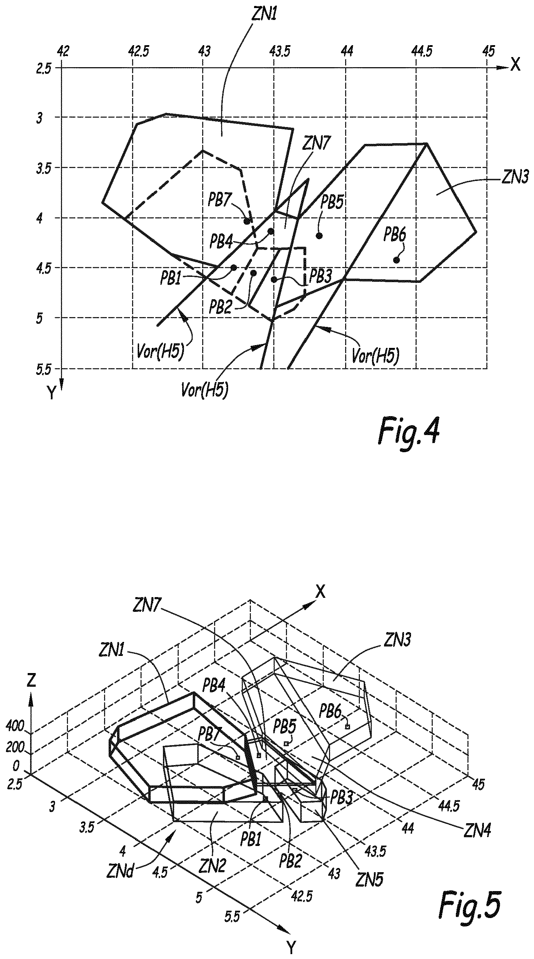

Pour illustration des étapes précédentes, la figure 4 représente l'ensemble ZNd_H5 des polygones décrits par la zone de déplacement ZNd dans tout plan perpendiculaire à l'axe Z, à une altitude comprise dans la plage H5. Ces polygones sont au nombre de quatre et correspondent aux zones convexes ZN1, ZN3, ZN4 et ZN7. Quatre points balises PB3, PB5, PB6, PB7 sont nécessaires à l'étape 102(5) pour la plage H5.

Les arêtes du diagramme de Voronoï obtenu sont repérées par la référence Vor(H5) et se superposent aux côtés des polygones décrits par les zones convexes ZN1, ZN3, ZN4 et ZN7, séparant ainsi ces polygones entre eux. Les autres polygones décrits par des zones convexes pour au moins une autre plage d'altitude parmi H1, H2, H3, sont représentés en pointillés, ainsi que les points balises PB1, PB2, PB3 alors utilisés.

Pour les plages d'altitude H4 et H6, seuls PB5 et PB7 seront utilisés (PB6 ne fait alors plus partie de la zone ZNd pour ces plages d'altitude).

Pour la plage H2, les points balises PB1, PB2 et PB3 sont utilisés.

Pour les plages H1 et H3, seuls PB1 et PB3 sont utilisés (PB2 ne fait alors plus partie de la zone ZNd pour ces plages d'altitude).

Sur la figure 5, les points balises PB1, PB2, PB3 sont représentés pour la plage d'altitude H2 et les points PB4, PB5, PB6, PB7 sont représentés pour la plage d'altitude H5.

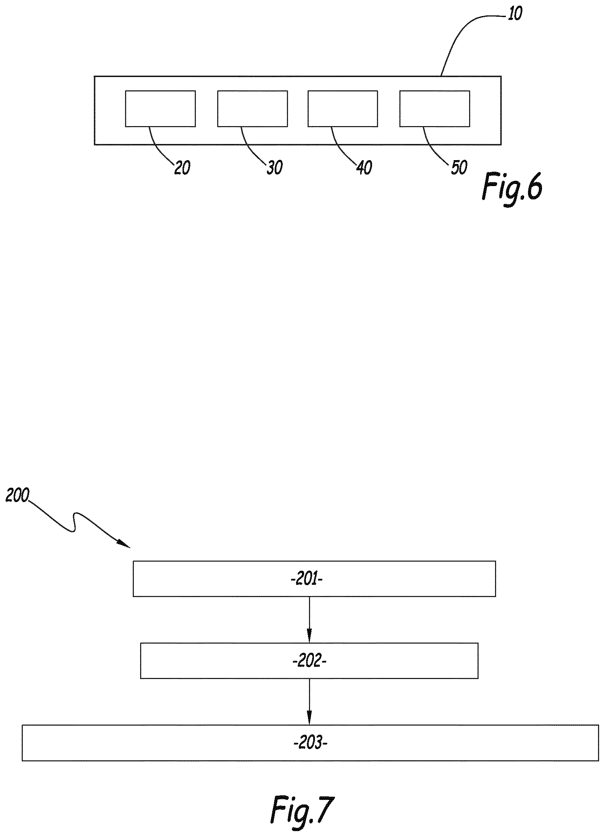

Dans le cas de la plage d'altitude H1, le diagramme de Voronoï comporte une arête qui est la droite médiatrice du segment [PB1, PB3]. Cette arête figure ainsi dans l'espace situé entre les polygones décrits par ZN2 et ZN5 et sépare bien entre eux ces polygones.
Dans le mode de réalisation décrit, l'endroit d'insertion d'un nouveau point balise est spécifié par un utilisateur du dispositif. Dans un autre mode de réalisation, il est défini par un algorithme, par exemple basé sur des méthodes d'optimisation sous contrainte, le critère à minimiser étant le nombre de balises créées. Dans un mode de réalisation, un engin aérien comporte un module 10 de repli vers une route d'urgence selon l'invention, en référence à la figure 6. Ce module de repli 10 est donc embarqué à bord de l'engin aérien et comporte une mémoire de travail 20, une base de données 30, un microprocesseur 40 et une interface homme-machine 50 comportant par exemple un écran et un clavier.

L'engin aérien a pour zone de déplacement autorisée la zone de déplacement autorisée ZNd représentée en figure 1, comportant les zones convexes ZN1 à ZN7.

Il dispose d'un plan de vol lui indiquant la route à suivre en mode de vol nominal. Le plan de vol qui a été conçu de manière à ce que l'engin aérien reste dans la zone de déplacement ZNd. Il comprend également des moyens de localisation lui indiquant sa position, lui permettant notamment de déterminer notamment ses coordonnées dans le repère R.

L'engin aérien, dans un mode de réalisation, ne comprend pas les données de définition de la zone ZNd.

En revanche, la base de données 30 du module de repli 10 comporte les données de définition de la route d'urgence telle que définies plus haut qui étaient mémorisées dans la base de données 3, c'est-à-dire :
- les coordonnées (X, Y) des points balises en association avec leur altitude plancher, leur altitude plafond, l'identifiant de la zone convexe à laquelle ils appartiennent respectivement et un attribut indiquant leur état de point balise de la route d'urgence, et
- les coordonnées (X, Y, Z) de chaque point de passage, en association avec un identifiant de la zone convexe à laquelle il appartient et un attribut indiquant leur état de point de passage de la route d'urgence.

Considérons qu'à un moment lors du vol nominal, l'engin aérien ait à quitter son plan de vol et à rejoindre la route d'urgence depuis son point de localisation courant, nommé C. L'opération de repli depuis le point C doit impérativement être réalisée sans sortir de la zone autorisée ZNd, ce qui est rendu possible selon l'invention par l'utilisation des données de la route d'urgence mémorisées dans la base de données 30 par le module de repli.

Ainsi en référence à la figure 7, dans un mode de réalisation d'un procédé 200 de repli d'une route d'urgence selon l'invention, les étapes 201-203 indiquées ci-dessous sont mises en oeuvre.

Dans un mode de réalisation, ces étapes, ou au moins certaines d'entre elles, sont réalisées suite à l'exécution d'instructions logicielles d'un programme d'ordinateur, par exemple dans le cas considéré stocké dans la mémoire 20 du module de repli 10.

Dans une étape 201, les points balises vérifiant à la fois les deux conditions suivantes Cond₁ et Cond₂ sont déterminés :
- Cond₁ : l'altitude plancher du point balise est inférieure à l'altitude correspondant à la position courante de l'engin aérien ; et
- Cond₂ : l'altitude plafond du point balise est supérieure à l'altitude correspondant à la position courante de l'engin aérien.

Dans une étape 202, parmi les points balises déterminés, le point balise le plus proche de la position courante de l'engin aérien, est identifié. Pour cela, on considère seulement les coordonnées des points balises et du point C de localisation de l'engin aérien dans le plan (X, Y) du repère R (dit autrement, on les considère à la même altitude).

Dans une étape 203, une fois que le point balise le plus proche a été identifié, un point de passage est sélectionné, dans la base de données 30, parmi les points de passage qui sont associés à un identifiant de zone convexe identique à l'identifiant de zone convexe, associé dans la base 30, au point balise ainsi identifié.

La sélection peut être effectuée selon des critères distincts. Le critère de choix peut être de choisir le point de passage le plus proche du point C dans R, ou le point minimisant la distance parcourue sur la route d'urgence.

L'engin aérien rejoint ensuite depuis son point courant C, le point de passage sélectionné.

Ce point courant C et le point balise identifié sont forcément dans la même zone convexe, du fait des propriétés des diagrammes de Voronoï, et du fait que les arêtes du diagramme de Voronoï des points balises définis pour la plage d'altitude considérée coïncident avec les côtés des polygones décrits par la zone autorisée ZNd sur la plage d'altitude considérée (en effet, si on considère un ensemble de points E = {xᵢ / i = 1 à n} dans un plan, alors pour chaque point xᵢ dans E, sa cellule de Voronoï Pxi dans le plan est telle que pour tout x l'intérieur de Pxi, la distance d(x,xi) < d(x,xj), quel que soit xj appartenant à E (j différent de i)).

Donc le point de passage sélectionné, qui fait partie de la même zone convexe que le point balise identifié, et le point courant C, font tous deux partie de la même zone convexe. L'engin aérien ne sortira donc pas de la zone autorisée en rejoignant ce point de passage depuis le point C.

L'invention permet ainsi le repli de la route d'urgence sans sortir de la zone autorisée, tout en évitant le stockage dans l'engin aérien des données de définition de la zone autorisée. Le volume des calculs à réaliser est ainsi limité.

Pour illustration, dans l'exemple considéré, seuls sept points balises ont été nécessaires, alors que l'approche connue de l'état de l'art nécessitait la connaissance des 35 sommets des zones convexes ZN1 à ZN7.

Dans le mode de réalisation décrit, les plages étaient traitées par ordre croissant d'altitude.

Dans un autre mode de réalisation, elles sont traitées par ordre décroissant de nombre de polygones décrits par les zones convexes dans les plages, ce qui est avantageux pour un choix optimal dans le nombre total des points balises nécessaires pour la zone de déplacement.

Dans un mode de réalisation, la coordonnée sur l'axe Z des points de passages est remplacée par une indication d'une plage d'altitude.

Dans le mode de réalisation décrit en référence aux dessins, l'axe Z, le long duquel les zones convexes décrivent des polygones constants sur des plages de l'axe Z, correspond à l'axe d'altitude.

Dans la description ci-dessus, l'engin mobile considéré était un engin aérien. Bien entendu, l'invention peut être mise en oeuvre pour tout type d'engin mobile, par exemple un sous-marin, une voiture etc.

## Revendications

1. Procédé (100) de définition d'une route de repli comprenant des points de passage, pour un engin mobile, dans une zone (ZNd) de déplacement 3D comportant des zones convexes (ZNi, i = 1 à 7) telles que sur une plage considérée (Hj, j=1 à 6) d'un axe Z, lesdites zones décrivent chacune un polygone dans tout plan perpendiculaire à un axe Z, ledit procédé étant mis en oeuvre par ordinateur et étant **caractérisé en ce qu'**il comprend les étapes i/ à ii/ suivantes relativement à ladite plage de l'axe Z, en considérant un plan quelconque perpendiculaire à l'axe Z sur ladite plage :
i/ on définit un ensemble de points (PBk, k = 1 à 7), dits points balises, associés à la route de repli, tels que des arêtes du diagramme de Voronoï associé audit ensemble de points balises séparent entre eux les polygones décrits par les zones convexes dans ledit plan ;
ii/ dans une base de données (3), on associe à chaque point de passage de la route de repli et chaque point balise, un identifiant de la zone convexe à laquelle ledit point appartient, des coordonnées dudit point dans un repère 3D (R) et pour chaque point balise, un identifiant de ladite plage de l'axe Z.

2. Procédé (100) de définition d'une route de repli selon la revendication 1, selon lequel les points de passage de la route de repli comprennent certains au moins desdits points balises sur ladite plage considérée (Hj, j=1 à 6) de l'axe Z.

3. Procédé (100) de définition d'une route de repli selon la revendication 1 ou 2, selon lequel :
- on découpe l'axe Z en une pluralité de plages (Hj, j=1 à 6) telles que les polygones décrits par les zones convexes de la zone de déplacement sont constants dans tous les plans perpendiculaire à l'axe Z sur une même plage ;
- sur chaque plage, les étapes i/ et ii/ sont mises en oeuvre.

4. Procédé (100) de définition d'une route de repli selon l'une des revendications précédentes, selon lequel dans l'étape i/, on insère un nouveau point balise dans un polygone décrit dans une zone convexe (ZNi, i=1 à 7), et on ajoute en outre tout point balise supplémentaire symétrique dudit nouveau point balise par rapport à tout côté dudit polygone et qui se trouve dans un autre polygone, décrit par une autre zone convexe sur ladite plage de l'axe Z (Hj, j=1 à 6).

5. Module (1) de définition d'une route de repli comprenant des points de passage, pour un engin mobile, dans une zone (ZNd) de déplacement 3D comportant des zones convexes (ZNi, i = 1 à 7) telles que sur une plage considérée (Hj, j=1 à 6) d'un axe Z, lesdites zones décrivent chacune un polygone dans tout plan perpendiculaire à un axe Z, ledit module étant **caractérisé en ce qu'**il est adapté pour, relativement à ladite plage de l'axe Z et étant considéré un plan quelconque perpendiculaire à l'axe Z sur ladite plage, définir un ensemble de points (PBk, k = 1 à 7), dits points balises, associés à la route de repli, tels que des arêtes du diagramme de Voronoï associé audit ensemble de points balises séparent entre eux les polygones décrits par les zones convexes dans ledit plan ; et **en ce qu'**il est adapté pour, dans une base de données (3), associer à chaque point de passage de la route de repli et chaque point balise, un identifiant de la zone convexe à laquelle ledit point appartient, des coordonnées dans un repère 3D (R) dudit point et pour chaque point balise, un identifiant de ladite plage de l'axe Z.

6. Programme d'ordinateur de définition d'une route de repli comprenant des points de passage, pour un engin mobile, dans une zone (ZNd) de déplacement 3D comportant des zones convexes (ZNi, i = 1 à 7) telles que sur une plage considérée (Hj, j=1 à 6) d'un axe Z, lesdites zones décrivent chacune un polygone dans tout plan perpendiculaire à un axe Z, ledit programme comportant des instructions pour mettre en oeuvre les étapes d'un procédé selon l'une quelconque des revendications 1 à 4 lors d'une exécution du programme par des moyens de traitement.

7. Procédé (200) de repli, par un engin mobile, sur une route de repli, dans une zone (ZNd) de déplacement 3D de l'engin mobile comportant des zones convexes décrivant chacune un polygone dans tout plan perpendiculaire à un axe Z sur une plage considérée (Hj, j = 1 à 6) de l'axe Z, ledit procédé étant **caractérisé en ce que**
l'engin mobile stocke une base de données embarquée (30) de points de passage d'une route de repli et de points balises (PBk, k = 1 à 7) associés à la route de repli, ayant été préalablement définie par un procédé (100) selon l'une des revendications 1 à 4 ; et **en ce que** ledit procédé comprenant les étapes suivantes :
- détermination de la valeur sur l'axe Z correspondant à la position courante de l'engin mobile et détermination, parmi les points balises dans la base de données embarquée (30), des points balises associés à un identifiant de plage de l'axe Z tels que la valeur sur l'axe Z déterminée pour l'engin mobile est comprise dans ladite plage ;
- identification, parmi lesdits points balises déterminés, du point balise le plus proche de l'engin mobile, en fonction des coordonnées des points balises dans la base de données embarquée (30) et en considérant que les points balises déterminés, sont au même niveau sur l'axe Z que l'engin mobile ;
- sélection d'un point de passage à rejoindre par l'engin mobile parmi les points de passage, dans la base de données embarquée (30), qui sont associés à un même identifiant de zone convexe que l'identifiant de zone convexe associé au point balise identifié.

8. Module de détermination pour un engin mobile, d'une route de repli, dans une zone (ZNd) de déplacement 3D de l'engin mobile comportant des zones convexes décrivant chacune un polygone dans tout plan perpendiculaire à un axe Z sur une plage considérée (Hj, j = 1 à 6) de l'axe Z,
l'engin mobile stockant une base de données embarquée (30) de points de passage d'une route de repli et de points balises (PBk, k = 1 à 7) associés à la route de repli, ayant été préalablement définie par un procédé (100) selon l'une des revendications 1 à 4 ;
ledit module de détermination étant adapté pour déterminer la valeur sur l'axe Z correspondant à la position courante de l'engin mobile et déterminer, parmi les points balises dans la base de données embarquée (30), des points balises associés à un identifiant de plage de l'axe Z tels que la valeur sur l'axe Z déterminée pour l'engin mobile est comprise dans ladite plage ;
ledit module de détermination étant adapté pour identifier, parmi lesdits points balises déterminés, le point balise le plus proche de l'engin mobile, en fonction des coordonnées des points balises dans la base de données embarquée (30) et en considérant que les points balises déterminés sont au même niveau sur l'axe Z que l'engin mobile ;
ledit module de détermination étant adapté pour sélectionner un point de passage à rejoindre par l'engin mobile parmi les points de passage, dans la base de données embarquée (30), qui sont associés
à un même identifiant de zone convexe que l'identifiant de zone convexe associé au point balise identifié.

9. Programme d'ordinateur destiné à un engin mobile et lui permettant de rejoindre une route de repli, dans une zone (ZNd) de déplacement 3D de l'engin mobile comportant des zones convexes décrivant chacune un polygone dans tout plan perpendiculaire à un axe Z sur une plage considérée (Hj, j = 1 à 6) de l'axe Z, ledit engin mobile stockant une base de données embarquée (30) de points de passage d'une route de repli et de points balises (PBk, k = 1 à 7) associés à la route de repli, ayant été préalablement définie par un procédé (100) selon l'une des revendications 1 à 4, ledit programme comportant des instructions pour mettre en oeuvre les étapes d'un procédé selon la revendication 7 lors d'une exécution du programme par des moyens de traitement.

## Patentansprüche

1. Verfahren (100) zur Bestimmung einer Rückzugsroute, die Durchgangspunkte aufweist, für eine mobile Maschine in einer 3D-Bewegungszone (ZNd), die konvexe Zonen (ZNi, i = 1 bis 7) aufweist, derart, dass auf einem betrachteten Bereich (Hj, J = 1 bis 6) einer Z-Achse die Zonen jeweils ein Polygon in jeder Ebene senkrecht zu einer Z-Achse beschreiben, wobei das Verfahren von einem Rechner ausgeführt wird und **dadurch gekennzeichnet ist, dass** es die folgenden Schritte i/ bis ii/ relativ zum Bereich der Z-Achse umfasst, wobei eine beliebige Ebene senkrecht zur Z-Achse in diesem Bereich berücksichtigt wird:
i/ eine Punktmenge (PBk, k = 1 bis 7), genannt Kennzeichnungspunkte, die der Rückzugsroute zugeordnet sind, definiert wird, derart dass die Ecken eines Voronoi-Diagramms, das der Menge an Kennzeichnungspunkten zugeordnet ist, untereinander die Polygone trennen, die in der Ebene durch die konvexen Zonen beschrieben sind;
ii/ in einer Datenbank (3) jedem Durchgangspunkt der Rückzugsroute und jedem Kennzeichnungspunkt eine Kennung der konvexen Zone, zu der der Punkt gehört, Koordinaten des Punkts in einem 3D(R)-Koordinatensystem und für jeden Kennzeichnungspunkt eine Kennung des Bereichs der Z-Achse zugeordnet wird.

2. Verfahren (100) zur Bestimmung einer Rückzugsroute nach Anspruch 1, nach dem die Durchgangspunkte der Rückzugsroute mindestens einige der Kennzeichnungspunkte auf dem betrachteten Bereich (Hj, j = 1 bis 6) der Z-Achse umfassen.

3. Verfahren (100) zur Bestimmung einer Rückzugsroute nach Anspruch 1 oder 2, nach dem:
- die Z-Achse in eine Mehrzahl von Bereichen (Hj, j = 1 bis 6) unterteilt wird, derart, dass die durch die konvexen Zonen beschriebenen Polygone der Bewegungszone in allen Ebenen senkrecht zur Z-Achse in einem selben Bereich konstant sind;
- auf jedem Bereich die Schritte i/ und ii/ ausgeführt werden.

4. Verfahren (100) zur Bestimmung einer Rückzugsroute nach einem der vorhergehenden Ansprüche, nach dem im Schritt i/ ein neuer Kennzeichnungspunkt in ein in der konvexen Zone (ZNi, i = 1 bis 7) beschriebenes Polygon eingefügt wird und außerdem jeder zusätzliche Kennzeichnungspunkt symmetrisch zum neuen Kennzeichnungspunkt in Bezug auf jede Seite des Polygons und der sich in einem anderen Polygon befindet, das durch eine andere konvexe Zone auf dem Bereich der Z-Achse (Hj, j = 1 bis 6) beschrieben wird, hinzugefügt wird.

5. Modul (1) zur Bestimmung einer Rückzugsroute, die Durchgangspunkte umfasst, für eine mobile Maschine in einer 3D-Bewegungszone (ZNd), die konvexe Zonen (ZNi, i = 1 bis 7) derart aufweist, dass auf einem betrachteten Bereich (HJ, j = 1 bis 6) einer Z-Achse die Zonen jeweils ein Polygon in jeder Ebene senkrecht zur Z-Achse beschreiben, wobei das Modul **dadurch gekennzeichnet ist, dass** es geeignet ist, relativ zum Bereich der Z-Achse und unter Berücksichtigung einer beliebigen Ebene senkrecht zur Z-Achse auf dem Bereich eine Punktemenge (PBk, k = 1 bis 7), genannt Kennzeichnungspunkte, zu definieren, die der Rückzugsroute zugeordnet sind, derart, dass Kanten des Voronoi-Diagramms, das der Menge an Kennzeichnungspunkten zugeordnet ist, untereinander die durch die konvexen Zonen in der Ebene beschriebenen Polygone trennen; und dass es geeignet ist, in einer Datenbank (3) jedem Durchgangspunkt der Rückzugsroute und jedem Kennzeichnungspunkt eine Kennung der konvexen Zone, zu der der Punkt gehört, Koordinaten in einem 3D-Koordinatensystem (R) des Punkts und für jeden Kennzeichnungspunkt eine Kennung des Bereichs der Z-Achse zuzuordnen.

6. Rechnerprogramm zur Bestimmung einer Rückzugsroute, die Durchgangspunkte umfasst, für eine mobile Maschine in einer 3D-Bewegungszone (ZNd), die konvexe Zonen (ZNi, i = 1 bis 7) aufweist, derart, dass auf dem betrachteten Bereich (Hj, j = 1 bis 6) einer Z-Achse die Zonen jeweils ein Polygon in jeder Ebene senkrecht zur Z-Achse beschreiben, wobei das Programm Instruktionen zum Ausführen der Schritte eines Verfahrens nach einem beliebigen der Ansprüche 1 bis 4 bei der Ausführung des Programms durch Verarbeitungsmittel aufweist.

7. Rückzugsverfahren (200) auf einer Rückzugsroute durch eine mobile Maschine in einer 3D-Bewegungszone (ZNd) der mobilen Maschine, die konvexe Zonen aufweist, die jeweils ein Polygon in jeder Ebene senkrecht zur Z-Achse auf einem betrachteten Bereich (Hj, j = 1 bis 6) der Z-Achse beschreiben, wobei das Verfahren **dadurch gekennzeichnet ist, dass** die mobile Maschine eine mitgeführte Datenbank (30) von Durchgangspunkten einer Rückzugsroute und Kennzeichnungspunkte (PBk, k = 1 bis 7), die der Rückzugsroute zugeordnet sind, speichert, die zuvor durch ein Verfahren (100) nach einem der Ansprüche 1 bis 4 definiert wurden;
und dass das Verfahren die folgenden Schritte umfasst:
- Bestimmen des Werts auf der Z-Achse entsprechend der aktuellen Position der mobilen Maschine und Bestimmen von Kennzeichnungspunkten, die einem Kennzeichen des Bereichs der Z-Achse zugeordnet sind, derart, dass der bestimmte Wert auf der Z-Achse für die mobile Maschine in dem Bereich enthalten ist, aus den Kennzeichnungspunkten in der mitgeführten Datenbank (30);
- Identifizieren eines Kennzeichnungspunkts, der am nächsten zur mobilen Maschine liegt, aus den bestimmten Kennzeichnungspunkten abhängig von den Koordinaten der Kennzeichnungspunkte in der mitgeführten Datenbank (30) und unter Berücksichtigung, dass die bestimmten Kennzeichnungspunkte auf dem gleichen Niveau auf der Z-Achse wie die mobile Maschine sind;
- Auswählen eines von der mobilen Maschine zu erreichenden Durchgangspunkts aus den Durchgangspunkten in der mitgeführten Datenbank (30), die einer selben Kennung der konvexen Zone zugeordnet sind, wie die Kennung der konvexen Zone, die dem identifizierten Kennzeichnungspunkt zugeordnet ist.

8. Modul zur Bestimmung einer Rückzugsroute für eine mobile Maschine in einer 3D-Bewegungszone (ZNd) der mobilen Maschine, die konvexe Zonen aufweist, die jeweils ein Polygon in jeder Ebene senkrecht zu einer Z-Achse auf einem betrachteten Bereich (Hj, j = 1 bis 6) der Z-Achse beschreiben, wobei die bewegliche Maschine eine mitgeführte Datenbank (30) von Durchgangspunkten einer Rückzugsroute und Kennzeichnungspunkte (PBk, k = 1 bis 7), die der Rückzugsroute zugeordnet sind, speichert, die vorher durch ein (100) nach einem der Anspruche 1 bis 4 bestimmt wurden;
wobei das Bestimmungsmodul geeignet ist, den Wert auf der Z-Achse, der einen aktuellen Position der mobilen Maschine entspricht, zu bestimmen und aus den Kennzeichnungspunkten in der mitgeführten Datenbank (30) Kennzeichnungspunkte zu bestimmen, die einer Kennung des Bereichs der Z-Achse zugeordnet sind, derart, dass der für die mobile Maschine bestimmte Wert auf der Z-Achse in dem Bereich enthalten ist;
wobei das Bestimmungsmodul geeignet ist, aus den bestimmten Kennzeichnungspunkten den zur mobilen Maschine am nächsten liegenden Kennzeichnungspunkt abhängig von Koordinaten der Kennzeichnungspunkte in der mitgeführten Datenbank (30) und unter Berücksichtigung, dass die bestimmten Kennzeichnungspunkte auf dem gleichen Niveau auf der Z-Achse sind wie die mobile Maschine, zu identifizieren; wobei das Bestimmungsmodul geeignet ist, einen von der mobilen Maschine zu erreichenden Durchgangspunkt aus den Durchgangspunkten in der mitgeführten Datenbank (30) auszuwählen, die einer selben Kennung einer konvexen Zone zugeordnet sind, wie die Kennung der konvexen Zone, die dem identifizierten Kennzeichnungspunkt zugeordnet ist.

9. Rechnerprogramm, das für eine mobile Maschine vorgesehen ist und ihr gestattet, eine Rückzugsroute in einer 3D-Bewegungszone (ZNd) der mobilen Maschine zu erreichen, die konvexe Zonen aufweist, die jeweils ein Polygon in jeder Ebene senkrecht zur Z-Achse auf einem betrachteten Bereich (Hj, j = 1 bis 6) der Z-Achse beschreiben, wobei die mobile Maschine eine mitgeführte Datenbank (30) von Durchgangspunkten einer Rückzugsroute und Kennzeichnungspunkte (PBk, k = 1 bis 7), die der Rückzugsroute zugeordnet sind, speichert, die zuvor durch ein Verfahren (100) nach einem der Ansprüche 1 bis 4 bestimmt wurde, wobei das Programm Instruktionen zum Ausführen der Schritte eines Verfahrens nach Anspruch 7 bei der Ausführung des Programms durch Verarbeitungsmittel aufweist.

## Claims

1. A method (100) for defining a fall back route comprising of way points, for a mobile machine, in a 3D zone (ZNd) of displacement having convex zones (Zni, i = 1 to 7) such that over a considered region (Hj, j = 1 to 6) of a Z axis, said zones each describe a polygon in any plane perpendicular to a Z axis, said method being **characterised in that** it is implemented on a computer and **in that** it comprises the following steps i/ to ii/ relative to said region of the Z axis, in considering any plane perpendicular to the Z axis over said region :
i/ defining a set of points (PBk, k = 1 to 7), referred to as beacons points associated to the fall back route, such that the edges of the Voronoi diagram associated with said set of beacon points separate therebetween the polygons described by the convex zones in said plane ;
ii/ in a database (3), associating with each way point of the fall back route and each beacon point, an identifier of the convex zone to which said point belongs, coordinates of said point in a 3D reference point system (R) and for each beacon point, an identifier of the said region of the Z axis.

2. A method (100) for defining a fall back route according to claim 1, in which the way points of the fall back route include at least some of said beacon points in said region under consideration (Hj, j = 1 to 6) of the Z axis.

3. A method (100) for defining a fall back route according to claim 1 or 2, in which :
- the Z-axis is cut into a plurality of regions (Hj, j = 1 to 6), such that the polygons described by the convex zones of the zone of displacement are constant in all planes perpendicular to the Z axis over a same region ;
- in each region, the steps i/ and ii/ are carried out.

4. A method (100) for defining a fall back route according to one of the preceding claims, in which in step i/, a new beacon point is inserted in a polygon described in a convex zone (Zni, i = 1 to 7), and moreover there is a further addition of every additional beacon point that is symmetrical with said new beacon point relative to any side of said polygon and which is located in another polygon, described by another convex zone over said region of the Z axis (Hj, j = 1 to 6).

5. A module (1) for defining a fall back route comprising of way points, for a mobile machine, in a 3D zone (ZNd) of displacement having convex zones (ZNi, i = 1 to 7) such that over a considered region (Hj, j = 1 to 6) of a Z axis, said zones each describing a polygon in any plane perpendicular to a Z axis,
said module being **characterised in that** it is adapted to, relative to said region of the Z axis and taking into consideration any plane perpendicular to the Z axis over said region, define a set of points (PBk, k = 1 to 7), referred to as beacon points, associated to the fall back route, such that the edges of the Voronoi diagram associated with the said set of beacon points separate therebetween the polygons described by convex zones in said plane ;
and **in that** it is adapted so as to, in a database (3), associate with each way point of the fall back route and each beacon point, an identifier of the convex zone to which said point belongs, coordinates of the said point in a 3D reference point system (R) and for each beacon point, an identifier of the said region of the Z axis.

6. A computer programme for defining a fall back route comprising of way points, for a mobile machine, in a 3D zone (ZNd) of displacement having convex zones (ZNi, i = 1 to 7) such that over a considered region (Hj, j = 1 to 6) of a Z axis, said zones each describe a polygon in any plane perpendicular to a Z axis, said programme including instructions for carrying out the steps of a method according to any one of claims 1 to 4 during the execution of the programme by data processing means.

7. A method (200) of fall back, by a mobile machine, to a fall back route, in a 3D zone (ZNd) of displacement of the mobile machine having convex zones each describing a polygon in any plane perpendicular to a Z axis in a region under consideration (Hj, j = 1 to 6) of the Z axis, said method being **characterised in that**
the mobile machine stores an on board database (30) of way points and beacon points (PBk, k = 1 to 7) associated to the fall back route that has been previously defined by a method (100) according to one of claims 1 to 4 ;
and **in that** said method comprises of the following steps of:
- determination of the value on the Z axis corresponding to the current position of the mobile machine and determination, from among the beacon points of the fall back route in the on board database (30), of the beacon points associated with an identifier of the region of the Z axis such that the value on the Z axis determined for the mobile machine is comprised within said region ;
- identification, from among said beacon points determined, of the beacon point that is closest to the mobile machine, on the basis of the coordinates of the beacon points in the on board database (30) and taking into consideration that the determined beacon points are at the same level on the Z axis as the mobile machine ;
- selection of a way point to be reached by the mobile machine from among the way points, in the on board database (30), which are associated with the same convex zone identifier as the convex zone identifier associated with the beacon point identified.

8. A module for determination for a mobile machine of a fall back route, in a 3D zone (ZNd) of displacement of the mobile machine comprising convex zones each describing a polygon in any plane perpendicular to a Z axis over a region under consideration (Hj, j = 1 to 6) of the Z axis,
the mobile machine storing an on board database (30) of way points and beacon points (PBk, k = 1 to 7) associated to the fall back route that has previously been defined by a method (100) according to one of claims 1 to 4 ;
said determination module being designed to determine the value on the Z axis corresponding to the current position of the mobile machine and to determine, from amongst the beacon points of the fall back route in the on board database (30), the beacon points associated with an identifier of the region of the Z axis such that the value on the Z axis determined for the mobile machine is comprised within said region ;
said determination module being adapted to identify, from among said determined beacon points, the beacon point that is closest to the mobile machine, on the basis of the coordinates of the beacon points in the on board database (30) and taking into consideration that the determined beacon points are at the same level on the Z axis as the mobile machine ;
said determination module being adapted to select a way point to be reached by the mobile machine from among the way points, in the on board database (30), which are associated with the same convex zone identifier as the convex zone identifier associated with the beacon point identified.

9. A computer programme designed for a mobile machine and enabling it to reach a fall back route, in a 3D zone (ZNd) of displacement of the mobile machine comprising convex zones each describing a polygon in any plane perpendicular to a Z axis over a region under consideration (Hj, j = 1-6) of the Z axis, said mobile machine storing an on board database (30) of way points and beacon points (PBk, k = 1 to 7)associated to the fall back route that has previously been defined by a method (100) according to one of claims 1 to 4, said programme including instructions for carrying out the steps of a method according to claim 7 during the execution of the programme by data processing means.
